# EUROPEAN PATENT APPLICATION

(11) **EP 4 501 755 A1**
(43) Date of publication of application: **05.02.2025**
(21) Application number: 23778050.7
(22) Date of filing: 24.03.2023
(51) Int. Cl.: B62D 25/20, B60L 50/60, B60K 1/04, B62D 21/00

(54) **LOWER AUTOMOBILE BODY STRUCTURE AND AUTOMOBILE**

(30) Priority: 31.03.2022 CN 202210344741
(71) Applicant: Great Wall Motor Company Limited, Hebei 071000 (CN)
(72) Inventor: ZHANG, Shuren, Baoding, Hebei 071000 (CN); HE, Zhijie, Baoding, Hebei 071000 (CN); ZHANG, Tao, Baoding, Hebei 071000 (CN); CHEN, Qiang, Baoding, Hebei 071000 (CN); WU, Wenbo, Baoding, Hebei 071000 (CN); FU, Jianwei, Baoding, Hebei 071000 (CN); BAI, Xuejuan, Baoding, Hebei 071000 (CN); ZHOU, Dandan, Baoding, Hebei 071000 (CN)
(74) Representative: Klunker IP Patentanwälte PartG mbB
(86) International application number: PCT/CN2023/083736
(87) International publication number: WO 2023/185682

(57) **Abstract**

A vehicle lower body structure and vehicle are provided. The vehicle lower body structure includes: a battery pack housing (1), which is arranged in a middle of a lower body and integrated with a vehicle body; connecting members (118), which are respectively arranged at a front end and a rear end of the battery pack housing (1) for connection; a lower body front structure (2), which is connected to connecting members (118) arranged at the front end; and a lower body rear structure (3), which is connected to connecting members (118) arranged at the rear end. The lower body front structure (2) includes a front engine room main body (21) formed by integral die-casting. The lower body rear structure (3) includes a rear floor (31) formed by integral die-casting. Through the integration of the battery pack housing and the vehicle body, and the use of a die-cast structure for both the front engine room and the rear floor, the vehicle lower body structure can facilitate the molding and preparation of the lower body structure, can reduce manufacturing costs, and contribute to the overall strength and lightweight of the lower body.

## Description

The present application claims priority to the patent application number 202210344741.6, titled "Vehicle lower body structure and vehicle", filed with the Patent Office of China on March 31, 2022, all of which are incorporated by reference in the present application.

### TECHNICAL FIELD

The present application relates to the technical field of vehicle, more particularly to a vehicle lower body structure. The present application also relates to a vehicle having the above-mentioned lower body structure.

### BACKGROUND

A vehicle lower body is a load-bearing part of an overall vehicle body, and its structural design has an important impact on the convenience and manufacturing cost of the whole vehicle. With the development of new energy vehicle technology, for new energy vehicle models, the structural strength, collision safety, and lightweight of the lower body are also important concerns in vehicle body design. The vehicle lower body in the prior art is generally assembled by welding stamped sheet metal parts. The sheet metal structure can ensure the structural strength of the body, but the excessive use of sheet metal structure is not conducive to reducing the manufacturing cost of the vehicle body. In addition, it is also difficult to help the lightweight of the body.

### SUMMARY

In view of this, it is an objective of the present application to provide a vehicle lower body structure for reducing manufacturing costs and helping improve the structural strength and lightweight of the lower body.

To achieve the above purpose, technical solutions of the present application are implemented as follows:
A vehicle lower body structure comprises: a battery pack housing, which is arranged in a middle of a lower body and integrated with a vehicle body; connecting members, which are respectively arranged at a front end and a rear end of the battery pack housing for connection; a lower body front structure, which is connected to connecting members arranged at the front end; and a lower body rear structure, which is connected to connecting members arranged at the rear end.

The lower body front structure comprises a front engine room main body formed by integral die-casting, and the front engine room main body is at least formed with engine room longitudinal beam parts for constructing engine room longitudinal beams, shock tower parts for constructing front shock towers, and wheel hood side beam parts for constructing wheel hood side beams.

The lower body rear structure comprises a rear floor formed by integral die-casting, and the rear floor is formed with rear floor longitudinal beams arranged on two sides, and rear wheel hoods connected to the rear floor longitudinal beams, respectively, at the two sides.

Further, the front engine room main body comprises side parts arranged on a left side and a right side, and a connecting part connected between rear ends of the side parts arranged on the left side and the right side, and the side parts arranged on the left side and the right side are at least formed with the engine room longitudinal beam parts, the shock tower parts, and the wheel hood side beam parts, respectively.

The rear floor is further formed with a plurality of rear floor crossbeams connected between the rear floor longitudinal beams on the two sides, and rear ends of the rear floor longitudinal beams on the two sides are respectively connected with rear sections of the rear floor longitudinal beams.

Further, the lower body front structure comprises a front subframe connected to the connecting members at the front end, the lower body rear structure comprises a rear subframe connected to the connecting members at the rear end, and the front subframe is connected to the front engine room main body, and the rear subframe is connected to the rear floor; and/or,
a shock tower reinforcing beam is connected between top ends of the shock tower parts on the two sides, and a front reinforcing beam is connected between front ends of the wheel hood side beam parts on the two sides.

Further, the battery pack housing has a frame arranged in a loop shape, and a front floor panel connected to an inner side of the frame, the frame and the front floor panel define a battery module installation space, the battery module installation space is arranged below the front floor panel, a front end and a rear end of the frame are respectively connected to the connecting members, and the front floor panel is provided with a middle duct and a seat installation crossbeam.

The middle duct is arranged along a length direction of the vehicle body, and two ends of the middle duct are respectively connected to the front end and the rear end of the frame, and the seat installation crossbeam is respectively connected to the frame and the middle duct.

Further, the front floor panel is arranged below a top of the frame, and a concave space defined by the frame and the front floor panel is formed at a top of the battery pack housing. The middle duct and the seat installation crossbeam are arranged in the concave space, and the seat installation crossbeam has two installation strut beams arranged on two sides of the middle duct.

Further, the concave space is filled with a heat transfer material; and/or, tops of the front end and the rear end of the frame are both provided with grooves, two ends of the middle duct are fixedly connected in corresponding grooves, respectively, and the middle duct defines therein a via hole which is arranged along a length direction of the middle duct for allowing a wiring harness and/or a pipeline to pass through.

Further, the frame has a hollow inner cavity, and the inner cavity is filled with a heat insulation and sound insulation material; and/or, the top of the front end of the frame is provided with a reinforcing beam, and the reinforcing beam is configured to be arranged corresponding to a rear end of the engine room longitudinal beam part, so as to form a barrier to the movement of the engine room longitudinal beam part toward a rear of the vehicle body.

Further, each of the front end and the rear end of the frame has a straight line portion extending in a width direction of the vehicle body, and inclined portions respectively connected to two ends of the straight line portion, and each of the inclined portions is inclined outwardly in a direction away from the straight line portion; and
the reinforcing beam comprises a middle beam body connected to a top of the straight line portion at the front end, and end beam bodies respectively connected to tops of both the inclined portions at the front end, and tops of the end beam bodies are inclined surfaces which are gradually lower in a direction away from the middle beam body.

Further, the frame has straight sections arranged on two sides, the straight sections extend along the length direction of the vehicle body, and the straight sections on the two sides constitute sill beams in the vehicle body; and/or, at least one of the frame, the middle duct, and the seat installation crossbeam is made of an aluminum profile, and the connecting members are cast by an aluminum alloy.

Further, a rear part of the wheel hood side beam part has a rear section of the wheel hood side beam part extending downward along a height direction of the vehicle body; a rear part of the engine room longitudinal beam part has a rear section of the engine room longitudinal beam part extending outward along a width direction of the vehicle body; the rear section() of the wheel hood side beam part is connected to the rear section of the engine room longitudinal beam part, and the rear section() of the wheel hood side beam part and the rear section of the engine room longitudinal beam part are provided with guide parts; and the guide parts are used to guide a collision force from a front of the vehicle to be transmitted backward.

Further, the guide part on the rear section of the wheel hood side beam part comprises a first rib part and a second rib part which are integrally formed on the rear section of the wheel hood side beam part; the first rib part extends along a length direction of the wheel hood side beam part and is arranged to be inclined downward from front to rear; the second rib part extends along a height direction of the wheel hood side beam part, intersects with the first rib part, and is arranged to be inclined forward from top to bottom; and/or,
the guide part on the rear section of the engine room longitudinal beam part comprises a third rib part integrally formed on the rear section of the engine room longitudinal beam part, and the third rib part extends along a length direction of the rear section of the engine room longitudinal beam part and is arranged to be inclined downward from front to rear.

Further, the side part is configured to have a collapse zone, a suspension installation reinforcing zone, and a collision reinforcing zone, which are arranged in sequence from front to rear, as well as a force transmission converging zone arranged below the collision reinforcing zone.

A material thickness of a primary surface position in the collapse zone is between 2.5 mm and 3 mm, a material thickness of a primary surface position in the suspension installation reinforcing zone is between 4 mm and 4.5 mm, a material thickness of a primary surface position in the collision reinforcing zone is between 3.5 mm and 4 mm, and a material thickness of a primary surface position in the force transmission converging zone is between 5 mm and 6 mm.

Further, the lower body front structure comprises a front bumper beam, which is connected between front ends of the engine room longitudinal beams on the two sides, and the lower body rear structure comprises a rear bumper beam, which is connected between rear ends of the rear sections of the rear floor longitudinal beam on the two sides; the rear bumper beam comprises: a bumper beam body having a hollow interior, and two connecting seats connected to front end surfaces of the bumper beam body; and the rear bumper beam is directly connected between the rear sections of the rear floor longitudinal beams at the two sides through the two connecting seats.

Further, the bumper beam body adopts an extruded aluminum structure, and a cross section of the bumper beam body is in a rectangular shape, a ratio of a width to a height of the cross section of the bumper beam body is not less than 0.7, and a reinforcing plate is integrally formed inside the bumper beam body, and the reinforcing plate is connected between a front side wall and a rear side wall of the bumper beam body; and/or,
the rear section of the rear floor longitudinal beam adopts an extruded aluminum profile, and the rear section of the rear floor longitudinal beam defines therein a plurality of longitudinal beam rear section collapse holes.

Compared with the prior art, the present application has the following advantages:
the vehicle lower body structure in embodiments of the present application features in that the battery pack housing is integrated with the vehicle body, the front engine room main body and the rear floor are both die-casting structures, the number of components in the battery pack housing and the middle of the vehicle body are reduced, and the characteristics of the die-casting process are utilized, such that it is conducive to the molding and preparation of the lower body structure, and can reduce the manufacturing cost, and help to improve the overall strength and lightweight of the lower body, thus having good practicality.

The present application also proposes a vehicle, which comprises the above-mentioned vehicle lower body structure.

The vehicle of the present application has the same beneficial effects as the above-mentioned vehicle lower body structure compared with the prior art, which will not be repeated here.

### DESCRIPTION OF THE DRAWINGS

The drawings constituting a part of the present application are used to provide a further understanding of the present application, and the schematic embodiments of the present application and their descriptions are used to explain the present application, and do not constitute an improper limitation of the present application. In the accompanying drawings:
FIG. 1 is a schematic diagram of a vehicle lower body structure according to the embodiment of the present application;
FIG. 2 is a schematic diagram of a connection between a battery pack housing and subframes according to an embodiment of the present application;
FIG. 3 is a structural schematic diagram of a battery pack housing according to an embodiment of the present application;
FIG. 4 is a schematic diagram of a concave space according to an embodiment of the present application;
FIG. 5 is a schematic diagram of a battery module installation space according to an embodiment of the present application;
FIG. 6 is a structural schematic diagram of a cross-section of a part taken from line A-A in FIG. 4;
FIG. 7 is a structural schematic diagram of a via hole in a middle duct according to an embodiment of the present application;
FIG. 8 is a structural schematic diagram of a reinforcing beam according to an embodiment of the present application;
FIG. 9 is a structural schematic diagram of a cross-section of a part taken from line G-G in FIG. 8;
FIG. 10 is a schematic diagram of an arrangement of a heat transfer material according to an embodiment of the present application;
FIG. 11 is a structural schematic diagram of an arrangement of a bottom support plate and a thermal insulation layer according to an embodiment of the present application;
FIG. 12 is a structural schematic diagram of a connecting member according to an embodiment of the present application;

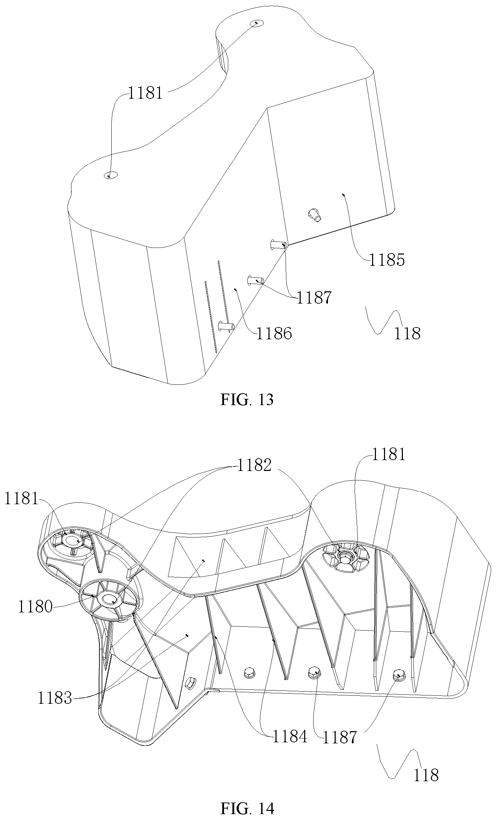

FIG. 13 is a structural schematic diagram of the connecting member according to an embodiment of the present application from another side perspective;
FIG. 14 is a structural schematic diagram of a connecting member according to an embodiment of the present application from the bottom perspective;
FIG. 15 is a schematic diagram of a lower body front structure according to an embodiment of the present application;
FIG. 16 is a structural schematic diagram of a lower body front structure according to an embodiment of the present application from a rear perspective;
FIG. 17 is a structural schematic diagram of a front engine room main body according to an embodiment of the present application;
FIG. 18 is a schematic diagram of a distribution of various zones on the front engine room main body according to an embodiment of the present application;
FIG. 19 is a partial structural schematic diagram of a rear structure of a vehicle body according to an embodiment of the present application;
FIG. 20 is a bottom view of the structure shown in FIG. 19;
FIG. 21 is a structural schematic diagram of a rear bumper beam according to an embodiment of the present application;
FIG. 22 is a partial enlarged view of part F in FIG. 21; and
FIG. 23 is a structural schematic diagram of a connecting seat according to an embodiment of the present application.

Description of reference numerals are as follows:
1, battery pack housing;
11, frame; 1100, partition; 1101, sub-cavity; 112, straight section; 113, groove; 1120, straight line portion; 1121, inclined portion; 114, reinforcing beam; 1140, middle beam body; 1141, end beam body; 1142, through hole; 1143, inclined surface; 1144, die cavity; 115, front floor panel; 1150, concave space; 116, battery module installation space; 117, seat installation crossbeam; 118, connecting member;
1180, subframe connection; 1181, body connection; 1182, installation sleeve; 1183, weight-reducing cavity; 1184, reinforcing rib; 1185, inner part; 1186, outer part; 1187, connection bolt;
12, middle duct; 1200, via hole; 13, graphene plate; 14, bottom support plate; 15, thermal insulation layer;
2, lower body front structure;
21, front engine room main body; 22, front reinforcing beam; 23, front installation beam; 24, rear installation beam; 25, shock tower reinforcing beam; 26, front windshield lower crossbeam; 27, roof side beam; 28, dash board; 29, front subframe; 210, front bumper beam; 211, energy absorption box;
2101, side part; 21011, engine room longitudinal beam part; 210111, rear section of engine room longitudinal beam part; 210112, third rib part; 21012, shock tower part; 21013, wheel hood side beam part; 210131, rear section of wheel hood side beam part; 210132, first rib part; 210133, second rib part; 2102, connection part; 2103, receiving groove; 2104, connecting plate;
3, lower body rear structure;
31, rear floor; 32, rear section of rear floor longitudinal beam; 33, rear bumper beam; 34, connecting seat; 35, rear subframe;
311, rear floor longitudinal beam; 312, rear wheel hood; 313, rear floor crossbeam; 331, reinforcing plate; 332, bumper beam collapse hole; 333, connecting via hole; 3301, front side wall; 3302, rear side wall; 3303, upper side wall; 3304, lower side wall;
341, connecting box; and 342, bumper beam connecting plate.

### DETAILED DESCRIPTION OF THE EMBODIMENTS

It is noted that, where there is no conflict, the embodiments and features within the embodiments of the present application can be combined with each other.

In the description of the present application, it should be noted that if there are terms indicating orientation or positional relationship such as "upper", "lower", "inner", "outer", etc., they are based on the orientation or positional relationship shown in the drawings, and are only for the convenience of describing the present application and simplifying the description, rather than indicating or implying that the device or element referred to must have a specific orientation, be constructed and operated in a specific orientation, and therefore cannot be understood as a limitation of the present application. In addition, if there are terms such as "first" and "second", they are also only used for descriptive purposes and cannot be understood as indicating or implying relative importance.

In addition, in the description of the present application, unless otherwise clearly defined, the terms "installation", "connected", "connection" and "connecting member" should be understood in a broad sense. For example, it can be a fixed connection, a detachable connection, or an integral connection; it can be a mechanical connection or an electrical connection; it can be a direct connection, or it can be an indirect connection through an intermediate medium, or it can be a connection between the two elements. For ordinary technicians in this field, the specific meanings of the above terms in the present application can be understood in combination with specific circumstances.

The present application will be described in detail below with reference to the accompanying drawings and in combination with embodiments.

Embodiments of the present application relate to a vehicle lower body structure. The vehicle is a new energy vehicle, and the lower body structure of embodiments of the present application can facilitate its molding and preparation, can reduce manufacturing costs, and contribute to the overall strength and lightweight of the lower body.

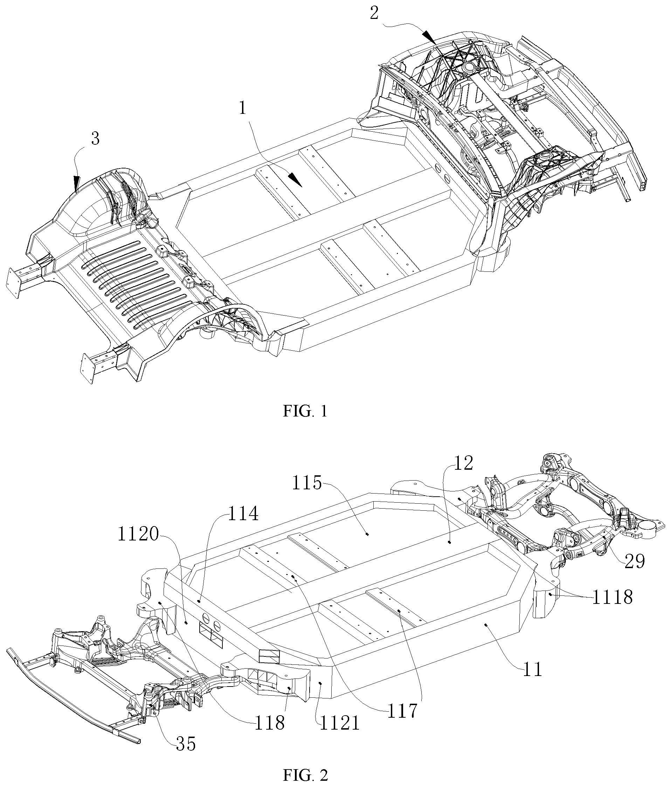

In terms of overall structure, as shown in FIG. 1, the vehicle lower body structure in embodiments of the present application comprises: a battery pack housing 1, which is arranged in a middle of a lower body and integrated with a vehicle body; connecting members 118, which are respectively arranged at a front end and a rear end of the battery pack housing 1 for connection; a lower body front structure 2, which is connected to connecting members 118 arranged at the front end; and a lower body rear structure 3, which is connected to connecting members 118 arranged at the rear end.

The battery pack housing 1 arranged in the middle is as shown in FIG. 2 to FIG. 9. As an exemplary structure, the battery pack housing 1 in this embodiment has a frame 11 arranged in a loop shape, and a front floor panel 115 connected to an inner side of the frame 11. The frame 11 and the front floor panel 115 define a battery module installation space 116, which is specifically arranged below the front floor panel 115. In addition, the front floor panel 115 is arranged below a top of the frame 11, and a concave space 1150 defined by the frame 11 and the front floor panel 115 is formed at a top of the battery pack housing 1.

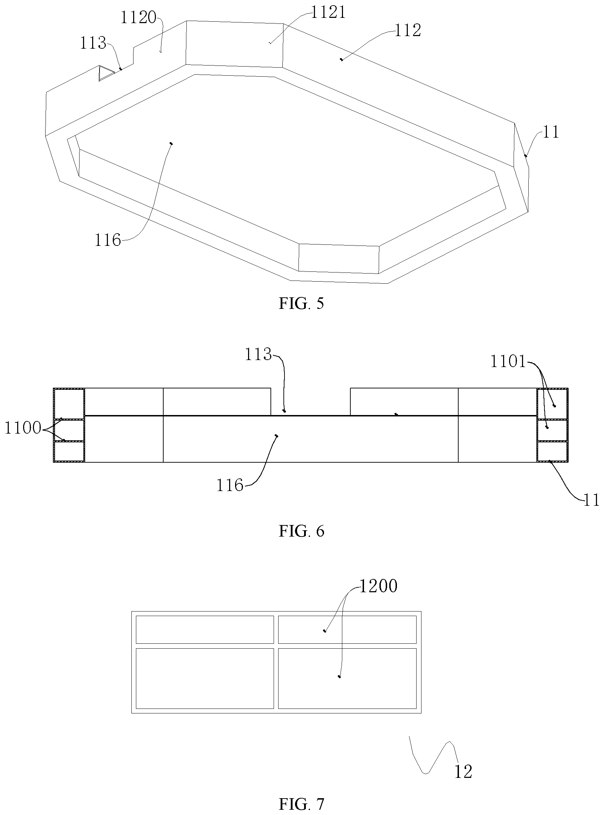

In embodiments of the present application, for the battery pack housing 1, as a preferred embodiment, the frame 11 is preferably made of an aluminum profile, such as an aluminum profile made by an extrusion aluminum process. The use of the aluminum profile can facilitate the processing and manufacturing. Moreover, as shown in FIG. 6, an inner cavity is also defined in the frame 11, and the frame 11 is made of an aluminum profile, which can also facilitate the arrangement of the inner cavity in the frame 11.

Based on the arrangement of the inner cavity in the frame 11, in embodiments of the present application, the inner cavity is also filled with a heat insulation and sound insulation material. In specific implementation, the heat insulation and sound insulation material can be made of, for example, a polyurethane foam material. In addition, as a preferred embodiment, a plurality of partitions 1100 can be provided within the inner cavity to divide the inner cavity into a plurality of sub-cavities 1101, and the heat insulation and sound insulation material is filled in each of the plurality of sub-cavities 1101.

By arranging a plurality of partitions 1100 in the inner cavity, the inner cavity is divided into a plurality of sub-cavities 1101, which has a good effect on improving the overall strength of the frame 11. When the frame 11 is used as the main body frame of the vehicle body, the frame 11 can have good supporting performance and the ability to withstand impact from the side part of the vehicle, which is conducive to improving the anti-impact and buffering performance of the frame 11.

The provision of heat insulation and sound insulation material can utilize the heat-resistance characteristics of heat insulation and sound insulation material to improve the overall heat insulation and heat preservation performance of the battery pack. In addition, since the inner cavity is a fully enclosed structure, in order to facilitate the addition of polyurethane foam material, a filling hole can be defined in the frame 11 to inject the polyurethane foam material into the inner cavity, which is convenient for operation and implementation, and the filling hole is blocked after the filling is completed.

It should be pointed out that in embodiments of the present application, the loop arrangement of the frame 11 does not mean that the frame 11 is annular as a whole, but means that the frame 11 is a complete loop structure; and can be in a shape of a rectangle, or a polygon with chamfered corners, and the structural shape can be flexibly adjusted according to the arrangement requirements of the frame of the middle of the vehicle body. The cross-sectional size and wall thickness of the frame 11 are constructed according to a principle that the frame 11 has sufficient vehicle body support strength.

In embodiments of the present application, the frame 11 has straight sections 112 arranged on two sides, and the straight sections 112 on the two sides extend along the length direction of the vehicle body, and the straight sections 112 on the two sides constitute sill beams in the vehicle body. The two sides of the frame 11 are partially constructed to be straight and used as sill beams of the vehicle body, which can simplify the overall frame structure at a lower part of the middle of the vehicle body. The frame 11, while being a component of the frame structure of the middle of the vehicle body, also serves as a side housing of the battery pack, has good support strength and battery protection performance, which is conducive to streamlining the assembly process of the vehicle.

In addition, the arrangement of the front floor panel 115 at the inner side of the frame 11 separates the passenger room from the battery module installation space 116. The front floor panel 115 is not only used as the front floor of the vehicle body, but also used as the upper housing of the battery pack, thus having a good effect on the simplification of vehicle components and the simplification of vehicle assembly process. Moreover, in the specific implementation, the front floor panel 115 can also be made of an aluminum alloy plate or other alloy plates with good heat transfer performance. In this way, between the battery module installation space 116 and the passenger room is provided a front floor panel 115 made of a metal and a heat transfer material which will be described hereinbelow is further provided thereon, thermal conductivity between the battery module installation space 116 and the passenger room can be good, which is conducive to achieving the floor heating effect of the battery pack.

In embodiments of the present application, a middle duct 12 is arranged in the concave space 1150 along the length direction of the vehicle body, and two ends of the middle duct 12 are respectively connected to the front end and the rear end of the frame 11. Such a design is not only conducive to enhancing the overall strength of the frame 11, but also helps to increase the overall strength of the body frame; and can provide a certain protective effect on the passenger room and the battery pack when the vehicle is hit from the front and rear.

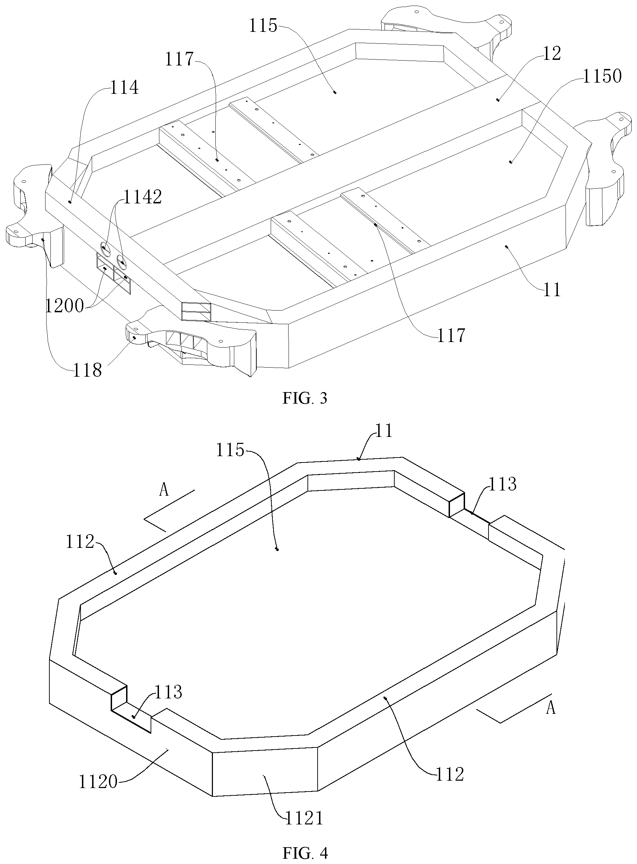

In such condition, as a preferred embodiment, referring to FIGS. 4-5, tops of the front end and the rear end of the frame 11 are both provided with grooves 113, and two ends of the middle duct 12 are fixedly connected in corresponding grooves 113, respectively. By providing two grooves 113 at the front end and the rear end of the frame 11, the connection strength between the frame 11 and the middle duct 12 can be improved, and the middle duct 12 will not protrude above the middle duct 12, which is convenient for the arrangement of the passenger room above the middle duct 12.

The above-mentioned middle duct 12 is preferably made of an aluminum profile, which has the advantages of being lightweight and easy to extrusion. Moreover, in embodiments of the present application, preferably, the middle duct 12 defines therein a via hole 1200 which is arranged along a length direction of the middle duct 12 for allowing a wiring harness and/or a pipeline to pass through, so as to facilitate the arrangement of the pipeline in the vehicle.

In embodiments of the present application, in a width direction of the vehicle body, a seat installation crossbeam 117 is also provided in the concave space 1150 and is arranged along the width direction of the vehicle body. A front seat installation crossbeam 117 is specifically an installation crossbeam for installing the front seat, and also has two installation strut beams arranged at two sides of the middle duct 12, and the two ends of each installation strut beam are respectively connected to the frame 11 and the middle duct 12. It can be understood that, the installation strut beam can also be connected to the front floor panel 115. By arranging the front seat installation crossbeam 117, it is not only convenient to arrange and install the vehicle seats, but also, due to the front seat installation crossbeam 117 being connected between and the middle duct 12 and the frame 11, the overall structural strength of the middle of the vehicle body can be effectively improved.

In addition, based on the arrangement of the middle duct 12 and the seat installation crossbeam 117, the concave space 1150 of embodiments of the present application is divided into several sub-spaces by the middle duct 2 and the seat installation crossbeam 117. In such condition, at least part of the sub-spaces is filled with the following heat transfer material to realize the transfer of heat from the battery pack to the passenger room.

Similar to the frame 11 and the middle duct 12, in the specific implementation, the seat installation crossbeam 117 is also preferably made of the aluminum profile.

As shown in FIGS. 3-4, in embodiments of the present application, a reinforcing beam 114 is also provided at the top of the front end of the frame 11. The reinforcing beam 114 is arranged along the width direction of the vehicle body, and the reinforcing beam 114 is configured to be arranged corresponding to a rear end of the engine room longitudinal beam part 21011 in the lower body front structure 2, so as to form a barrier to the movement of the engine room longitudinal beam part 21011 toward a rear of the vehicle. The arrangement of the reinforcing beam 114 can improve the support strength of the front part of the frame 11, which is not only convenient for the front engine room longitudinal beam of the vehicle and the frame 11 to connect with the reinforcing beam 114. Moreover, in the overall vehicle body, the engine room longitudinal beam is generally slightly higher than the frame 11. The arrangement of the reinforcing beam 114 can make it at the same height as the engine room longitudinal beam part 21011, which can keep the force transmission from the engine room longitudinal beam part 21011 to the vehicle middle structure smooth, and reduce the phenomenon that engine room longitudinal beam to flip up during a collision, in a case where the height of the engine room longitudinal beam is higher than a height of the battery pack structure.

In addition, in embodiments of the present application, as a preferred implementation manner, each of the front end and the rear end of the frame 11 has a straight line portion 1120 extending in a width direction of the vehicle body, and inclined portions 1121 respectively connected to two ends of the straight line portion 1120, and each of the inclined portions 1121 is inclined outwardly in a direction towards the rear of the vehicle. In such condition, the arrangement of the inclined portion 1121 can effectively avoid components such as the wheel and the fender lining thereof, and can also facilitate the arrangement of the following connecting members 118.

Corresponding to the end structure of the frame 11, the reinforcing beam 114 of embodiments of the present application also specifically comprises a middle beam body 1140 connected to a top of the straight line portion 1120, and end beam bodies 1141 respectively connected to tops of both the inclined portions 1121. In such condition, based on the shape arrangement of the front end of the frame 11, the reinforcing beam 114 is designed as a middle beam body 1140 arranged in the middle and end beam bodies 1141 at two ends, so as to be connected to the tops of the straight line portion 1120 and the inclined portion 1121, respectively, which can improve the matching degree and integral connection strength of the reinforcing beam 114 and the frame 11.

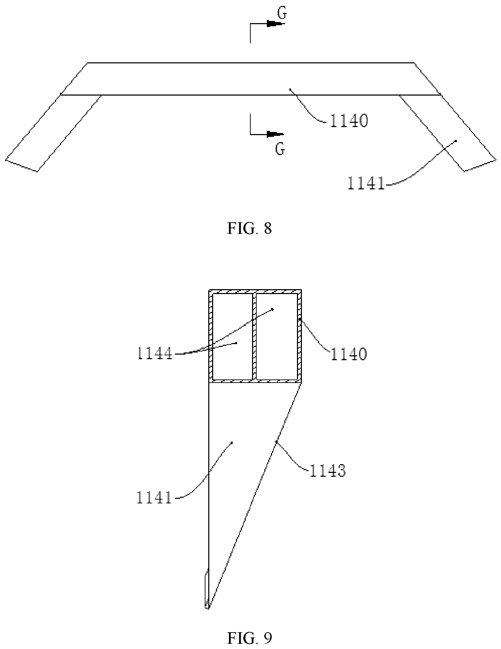

The middle beam body 1140 of embodiments of the present application is preferably made of an aluminum profile. In addition, a through hole 1142 is arranged in the middle beam body 1140 along the length direction of the vehicle body to facilitate the installation of pipelines. As shown in FIGS. 8 and 9, a die cavity 1144 can also be arranged inside the middle beam body 1140. In such condition, the middle beam body 1140 is manufactured by the aluminum profile and can be easy to extrusion and have sufficient strength. The arrangement of the die cavity 1144 is conducive to reducing the weight of the reinforcing beam 114.

In addition, as a preferred embodiment, tops of the end beam bodies 1141 are inclined surfaces which are gradually lower in a direction away from the middle beam body 1140. The tops of the end beam bodies 1141 are constructed to be inclined surfaces which are gradually lower, which can be connected to the top of the frame 11 as a whole, improving the overall shape regularity of the reinforcing beam 114 and the frame 11, and facilitate the installation and arrangement of adjacent components such as body sheet metal.

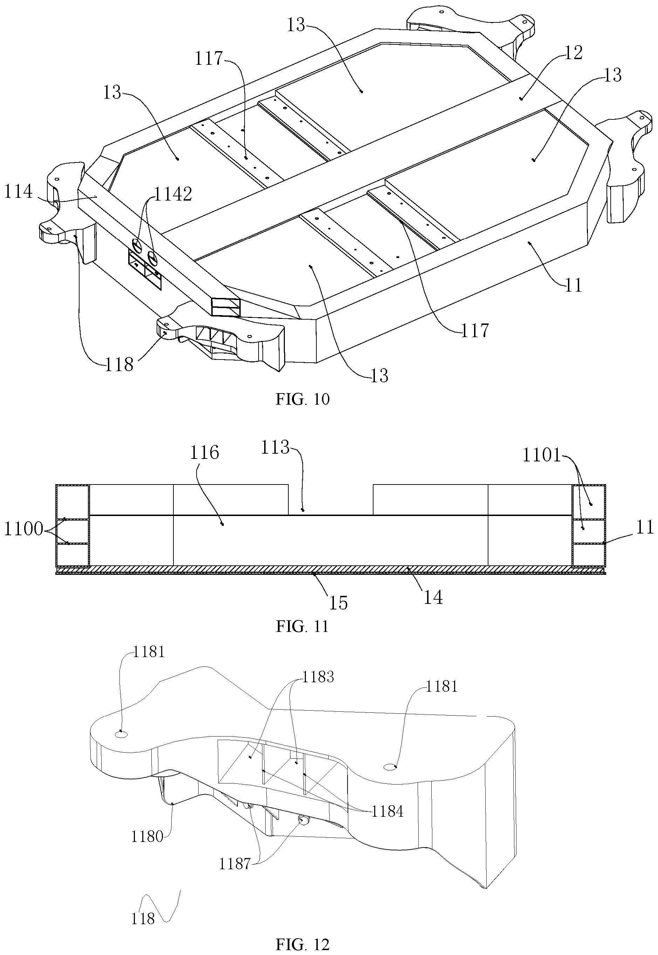

In embodiments of the present application, as a preferred embodiment, referring to FIGS. 10-11, the concave space 1150 can be filled with a heat transfer material. The above-mentioned heat transfer material is, for example, a graphene material, and specifically a graphene plate 13 as shown in FIG. 10 can be used. The graphene material has excellent thermal conductivity. The graphene plate 13 can be used to transfer the heat generated by the battery pack during operation to the passenger room, thereby making the battery pack at the bottom of the passenger room a floor heating structure with a heating effect.

In addition to using the graphene material, the heat transfer material in embodiments of the present application can also use other existing products with excellent thermal conductivity. For example, the heat transfer material can also use existing graphene/aluminum products, which can also achieve the effect of making the battery pack a floor heating structure.

Similar to the battery pack structure in existing vehicles, a bottom support plate 14 connected to the frame 11 can also be provided at the bottom of the battery pack housing 1. The bottom support plate 14 is used to close the battery module installation space 116, and the battery module or other components can also be installed on the bottom support plate 14. In addition to provide the heat transfer material in the concave space 1150 at the top, as a further preferred embodiment, as shown in FIG. 11, in embodiments of the present application, at least part of the lower end surface of the bottom support plate 14 is covered with a thermal insulation layer 15. Thermal insulation layer 15 can be made of a heat insulation material commonly used in existing vehicles, for example, can be made of a material similar to a vehicle interior insulation pad, or an insulation part surrounding the vehicle exhaust pipe.

By covering the lower end surface of the bottom support plate 14 with thermal insulation layer 15, the heat of the battery pack can be prevented from being lost through the bottom support plate 14, thereby better ensuring the heating effect of the battery pack.

When the battery pack housing 1 of embodiments of the present application is in use, a carpet is also laid on the top of the housing to serve as a decoration. During the operation of the vehicle, for the battery pack housing 1 provided with the heat transfer material, the operation of the battery pack cooling system can be controlled by detecting the temperature outside the vehicle and the temperature inside the vehicle to meet the temperature control requirements in the passenger room.

Specifically, when the temperature outside the vehicle is high, such as in summer, the cooling system of the battery pack is operated to reduce the temperature of the battery pack. In such condition, the temperature of the battery pack is generally lower than the temperature in the room, and the heat of the battery pack will not be transferred to the room. The room uses air conditioning to control the temperature.

When the temperature outside the vehicle is low, such as in winter, the battery pack cooling system can be operated at low power or not operated, in such condition, the battery pack temperature is high, and the heat of the battery pack is transferred to the passenger room through the heat transfer material, which plays the role of floor heating. When the battery pack temperature exceeds an upper limit, the operating power of the cooling system should be adjusted to avoid high temperature problems in the battery pack.

In embodiments of the present application, the arrangement of heat transfer material at the top of the battery pack housing 1 and the arrangement of thermal insulation layer 5 at the bottom are adopted, when the vehicle works in cold seasons, the heat generated by the battery pack can be transferred to the passenger room through the heat transfer of the heat transfer material, so that the battery pack arranged at the bottom of the passenger room becomes a structure similar to floor heating, thereby making full use of the heat generated by the battery pack, reducing the operating workload of the battery pack cooling system, reducing the air conditioning heating workload, thereby being conducive to reducing the energy consumption of the entire vehicle.

In embodiments of the present application, for the connecting members 118, the connecting member 118 is provided with a subframe connection portion for fixed connection with the subframe, and a body connection portion for fixed connection with the lower body front structure 2 or the lower body rear structure 3. By arranging the connecting members 118 and providing the subframe connection portion and the body connection portions thereon, the front, middle and rear parts of the vehicle body can be connected as a whole through the connecting members, thereby improving the overall structural stability of the entire vehicle and improving the anti-collision performance.

Specifically, in embodiments of the present application, the connecting members 118 at each end are arranged close to two sides of the frame 11, and the connecting members 118 can be fixed on the frame 11 as the housing by welding, riveting, and the like. A detachable method, such as a screw structure, can also be used to fix the connecting members 118 to the frame 11. The detachable connection method is adopted to make the connecting members 118 detachably connected to the housing, which is convenient for the separate processing and manufacturing of various components and the replacement and assembly of damaged components.

In embodiments of the present application, the two connecting members 118 at the front end are used to connect the front subframe 29, and the two connecting members 118 at the rear end are used to connect the rear subframe 35. As for the body connection portions on each connecting member 118, generally, the two connecting members 118 at the front end are used to connect the front engine room main body 2101, and the two connecting members 118 at the rear end are used to connect the rear floor 31.

In addition, in the specific implementation, the above subframe connection portions and the body connection portions can usually use the installation sleeve arranged in the connecting member 118 to cooperate with the bolt to connect with the corresponding components. Furthermore, the connection strength and reliability can be improved by providing the installation sleeves to connect the connecting member 118 to the subframe and the lower body front structure and the lower body rear structure of the vehicle.

The connecting members 118 of embodiments of the present application can be made of forged steel, cast iron, aluminum alloy, and the like. Preferably, the connecting members 118 of embodiments of the present application are cast by the aluminum alloy. The use of the cast aluminum is convenient for the process and manufacture, and is conducive to the lightweight design of the vehicle structure.

In addition, more specifically, the connecting member 118 is provided with two body connection portions 1181 for connecting with the lower body front structure 2 or the lower body rear structure 3, and a subframe connection portion 1180 is provided for connecting with the front subframe 29 or the rear subframe 35. The installation sleeve 1182 provided in the connecting member 118 can be used at the subframe connection portion 1180 and/or the body connection portion 1181, and the corresponding parts are connected with bolts. The connection of the connecting member 118 with the subframe and the front and rear structures of the body is facilitated by providing the installation sleeve 1182 at the subframe connection portion 1180, the body connection portion 1181, etc., which is conducive to improving the connection strength and reliability.

Based on that each connecting member 118 is formed by casting of the aluminum alloy, in embodiments of the present application, a plurality of weight-reducing cavities 1183 are formed in the connecting member 118, and reinforcing ribs 1184 are provided in the weight-reducing cavities 1183. The arrangement of the weight-reducing cavities 1183 and the reinforcing ribs 1184 in the connecting member 118 can effectively reduce the weight and the manufacturing cost of the connecting member 118 while ensuring sufficient connection strength of the connecting member 118.

In embodiments of the present application, the connecting members 118 are provided between the middle part and each of the front part and the rear part of the vehicle body, the connecting members 118 are fixedly installed at the battery pack housing 1 integrated with the vehicle body. The subframe connection portions 1180 and the vehicle body connection portions 1181 on each connecting member 118 are respectively utilized to connect with the subframe and the front and rear structures of the vehicle body, so that multiple vehicle body structural components can be connected with the connecting members 118 as a whole, which is conducive to the integrated design of the connection structure and helps the connection and assembly of the vehicle main structure.

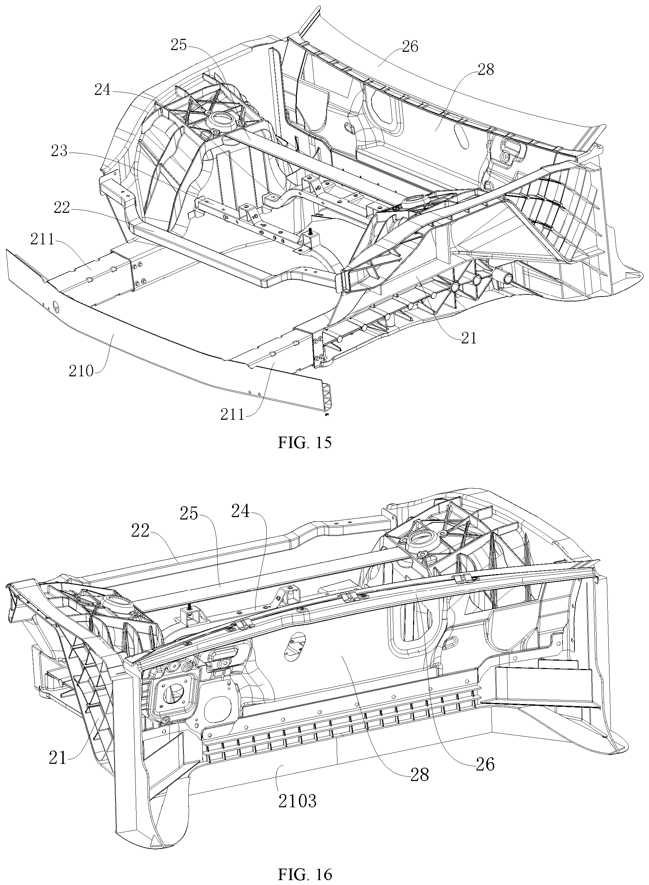

For the lower body front structure 2 of embodiments of the present application, specifically, referring to FIGS. 15-18, the lower body front structure 2 is designed to comprise: a front engine room main body 21 formed by integral die-casting, and a front bumper beam 210 connected to the front end of the front engine room main body 21.

The front engine room main body 21 preferably also formed by die-cast by a cast aluminum alloy. In addition, the front engine room main body 21 has side parts 2101 arranged on the left and right sides, and a connecting part 2102 connected between the rear ends of the side parts 2101 on the two sides. The side parts 2101 on two the sides are at least formed with engine room longitudinal beam parts 21011 for constituting engine room longitudinal beams, shock tower parts 21012 for constituting front shock towers, and wheel hood side beam parts 21013 for constituting wheel hood side beams. The front bumper beam 210 is specifically connected to the engine room longitudinal beam parts 21011 on the two sides through energy absorption boxes 211.

In embodiments of the present application, a front reinforcing beam 22 is connected between the front ends of the wheel hood side beam parts 21013 on the two sides. The arrangement of the front reinforcing beam 22 connects the wheel hood side beam parts 21013 on the two sides, thereby improving the structural strength of the front end of the front engine room structure. In addition, as a preferred embodiment, the above-mentioned connecting portion 2102 is also specifically connected to lower parts of the side parts 2101, and a front windshield lower cross beam 26 is connected between tops of rear ends of the side parts 2101 on the two sides. In addition, in embodiments of the present application, a dash board mounting opening is formed between the side parts 2101 on the two sides and the connecting portion 2102, and the dash board 28 is detachably connected to the dash board mounting opening, and a top of the dash board 28 is also detachably connected to the front windshield lower cross beam 26. The detachable arrangement of the dash board 28 is conducive to the later maintenance and replacement thereof.

In embodiments of the present application, by connecting the front windshield lower cross beam 26 between the tops of the rear ends of the side parts 2101 on the two sides, and connecting the dash board 29 to the front windshield lower cross beam 26, it is conducive to improving the structural strength of the rear end of the front structure of the vehicle body. In addition, in order to improve the structural strength of the front end of the side part 2101, in the resent embodiment, a connecting plate 2104 is also formed on each side part 2101 and is connected to the front portion of the wheel hood side beam part 21013, the front portion of the engine room longitudinal beam part 21011, and the shock tower part 21012. The connecting plate 2104 is integrally formed with the corresponding wheel hood side beam part 21013, engine room longitudinal beam part 21011, and shock tower part 21012 during die casting.

In order to improve the structural strength of the shock tower part 21012, in embodiments of the present application, preferably, a shock tower reinforcing beam 25 is connected between top ends of shock tower parts 21012 on two sides, and an engine room mounting bracket assembly is connected between the shock tower parts 21012 on the two sides. The engine room mounting bracket assembly structurally comprises a mounting beam connected between the shock tower parts 21012 on at two sides, and a component mounting bracket is provided on the mounting beam.

In such condition, as an exemplary structure, the above-mentioned mounting beam may comprise a front installation beam 23 and a rear installation beam 24 connected between the shock tower parts 21012 on the two sides, and a component mounting bracket arranged thereon may adopt an existing conventional bracket structure. In a specific implementation, the above-mentioned engine room mounting bracket assembly can be used, for example, for the installation of a drive motor in the front engine room. In addition to the drive motor, other vehicle components can also be installed therein.

In this embodiment, as a specific implementation manner, a rear part of the wheel hood side beam part 21013 has a rear section 210131 of the wheel hood side beam part extending downward along a height direction of the vehicle body. A rear part of the engine room longitudinal beam part 21011 has a rear section 210111 of the engine room longitudinal beam part extending outward along a width direction of the vehicle body. The rear section 201031 of the wheel hood side beam part is connected to the rear section 210111 of the engine room longitudinal beam part. The rear section 210131 of the wheel hood side beam part and the rear section 210111 of the engine room longitudinal beam part are provided with guide parts, and the guide parts are used to guide a collision force from a front of the vehicle to be transmitted backward.

In addition, as a specific implementation manner, the guide part on the rear section 210131 of the wheel hood side beam part specifically comprises a first rib part 210132 and a second rib part 210133 which are integrally formed on the rear section 210131 of the wheel hood side beam part. The first rib part 210132 extends along a length direction of the wheel hood side beam part 21013 and is arranged to be inclined downward from front to rear. The second rib part 210133 extends along a height direction of the wheel hood side beam part 21013, intersects with the first rib part 210132, and is arranged to be inclined forward from top to bottom.

In addition, the first rib part 210132 is specifically a plurality of ribs arranged at intervals along the height direction of the vehicle body, and the second rib part 210133 is a plurality of ribs arranged at intervals along the length direction of the vehicle body. In addition, both the first rib part 210132 and the second rib part 210133 are curved in arc shapes. The guide part on the rear section 210111 of the engine room longitudinal beam part specifically comprises a third rib part 210112 integrally formed on the rear section 210111 of the engine room longitudinal beam part, and the third rib part 210112 extends along a length direction of the rear section 210111 of the engine room longitudinal beam part and is arranged to be inclined downward from front to rear.

The arrangement of the above-mentioned guide parts can guide the collision force in front of the vehicle to be transmitted to the rear, and can guide the collision force to be transmitted to positions of the A-pillar and the sill beams towards the rear, thereby facilitating the transmission effect of the collision force. Making each guide part an integrally formed rib part can also make full use of the characteristics of the integral die-casting of the front engine room main body 21, which is convenient for the design and implementation of each guide part.

In addition, in embodiments of the present application, a receiving groove 2103 is also formed at a bottom of the rear end of the front engine room main body 21, and the receiving groove 2103 is used to accommodate the reinforcing beam 114 at the top of the front end of the battery pack housing 1, so as to facilitate the arrangement of the reinforcing beam 114.

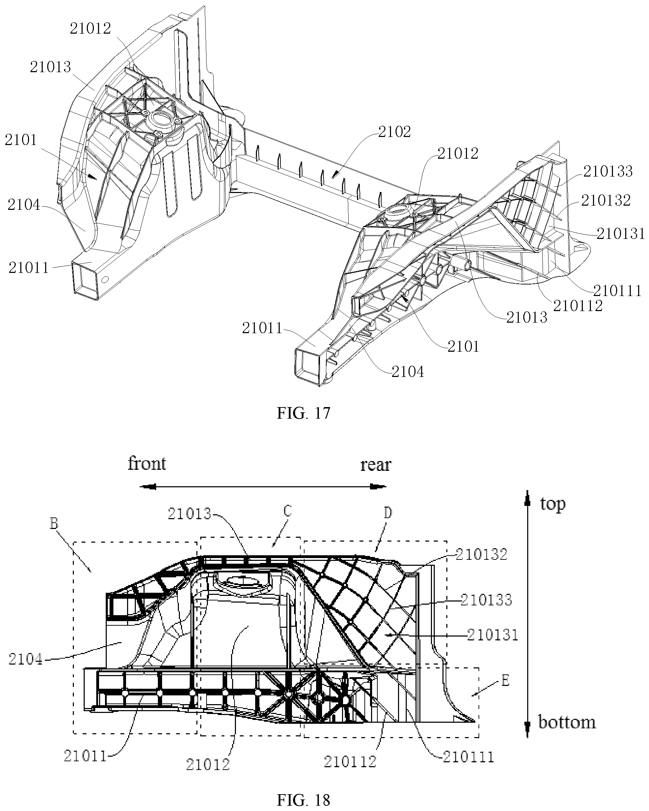

In addition, in order to improve the use effect, as shown in FIG. 18, the side part 2101 of embodiments of the present application is also configured to have a collapse zone B, a suspension installation reinforcing zone C, and a collision reinforcing zone D, which are arranged in sequence from front to rear. As a further embodiment, as shown in FIG. 18, the side part 2101 is also configured to have a force transmission converging zone E arranged below the collision reinforcing zone D. Moreover, in order to clearly illustrate the positions of these zones, the positions of these zones are indicated by dotted lines in FIG. 18. The front part of the aforementioned wheel hood side beam part 21013, the front part of the engine room longitudinal beam part 21011 and the connecting plate 2104 constitute the collapse zone B. The collapse zone B is the preferred collapse zone during a frontal collision, and the material thickness of the primary surface position is between 2.5 mm and 3 mm, and can be, for example, 2.5 mm, 2.8 mm, 3 mm, and other values.

A middle part of the wheel hood side beam part 21013, a middle part of the engine room longitudinal beam 21011, and the shock tower part 21012 constitute the suspension installation reinforcement zone C. The suspension installation reinforcement zone C is used to assemble a front suspension, which requires strong rigidity. A material thickness of the primary surface position is between 4 mm and 4.5 mm, for example, 4 mm, 4.2 mm, 4.3 mm, 4.5 mm, and other values. The rear section 210131 of the wheel hood side beam part constitutes the collision reinforcement zone D, which is used to connect with a vehicle A-pillar, plays a fixed reinforcement role, and is also a stress concentration zone. A material thickness of the primary surface position is between 3.5 mm and 4 mm, and can be, for example, 3.5 mm, 3.7 mm, 3.8 mm, 4 mm, and other values.

The rear section of the engine room longitudinal beam part 210111 constitutes the force transmission converging zone E, and a material thickness of the primary surface position in the force transmission converging zone E is between 5 mm and 6 mm, and can be, for example, 5 mm, 5.3 mm, 5.6 mm, 6 mm, and other values. By division into functional zones and reasonable arrangement of material thicknesses thereof, the front engine room main body 21 of embodiments of the present application can effectively improve the collision safety of the front engine room main body 21, which can not only improve the transmission effect of the collision force, but also avoid excessive weight caused by excessive overall material thickness.

Here, it should be noted that the primary surface position specifically refers to a main part of the die-cast front engine room main body 21, that is, the part extending in a plate or sheet shape. The local installation point position and each reinforcing rib do not belong to the primary surface position described in embodiments of the present application, and the local installation point position generally needs to be thickened. Each reinforcing rib often adopts a fixed material thickness, and usually selects a thickness value such as 3 mm, 4 mm or 5 mm. According to the simulation analysis results, the material thickness of each reinforcing rib can also be adjusted to select other values.

In addition, in the lower body front structure 2 of embodiments of the present application, it should be pointed out that the front reinforcing beam 22, the front windshield lower cross beam 26, and the side parts 2101 on the two sides can form a force transmission loop; the shock tower parts 21012 on the two sides, the shock tower reinforcing beam 25, and the engine room mounting bracket assembly can also form a force transmission loop; and each engine room longitudinal beam part 21011, the corresponding wheel hood side beam part 21013, and the corresponding connecting plate 2104 can also be connected to form a force transmission loop arranged around the corresponding shock tower part 21012. By arranging several force transmission loops, the strength and collision safety performance of the front structure can also be better improved.

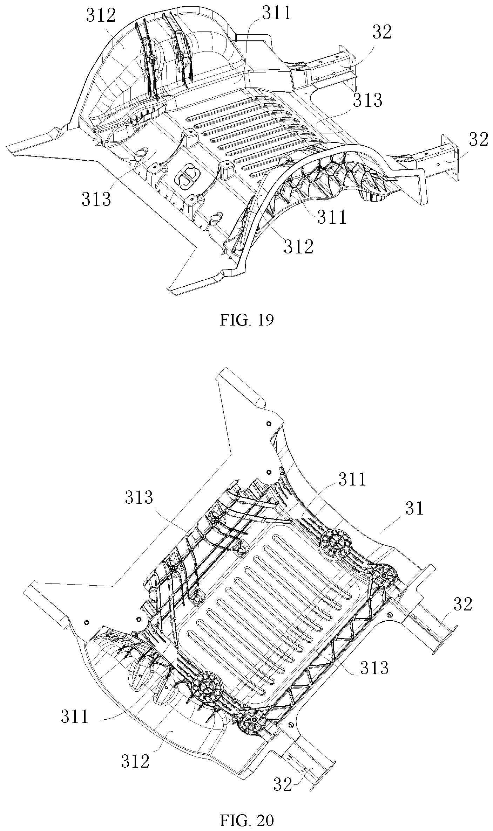

In embodiments of the present application, for the lower body rear structure 3, specifically, as shown in FIGS. 18-23, the lower body rear structure 3 comprises a rear floor 31 formed by integral die-casting, and the rear floor 31 is formed with rear floor longitudinal beams 311 arranged on two sides, and rear wheel hoods 332 connected to the rear floor longitudinal beams 311, respectively, at the two sides. The rear floor 31 is further formed with a plurality of rear floor crossbeams 313 connected between the rear floor longitudinal beams 311 on the two sides, and rear ends of the rear floor longitudinal beams 311 on the two sides are respectively connected with rear sections 32 of the rear floor longitudinal beams. A rear bumper beam 34 is connected between the rear ends of the rear sections 32 of the rear floor longitudinal beams.

With respect to the rear floor 31 of embodiments of the present application, for examples, two above-mentioned rear floor crossbeams 313 can be arranged at intervals at the front end and the rear end, and the rear floor crossbeam 313 arranged at the front end is usually provided with a rear seat mounting hole for the installation of the rear seat, while the rear floor crossbeam 313 arranged at the rear end can be used for the installation of a spare tire box. In addition, a rear subframe mounting structure is usually provided on the rear floor longitudinal beams 311 on the two sides, and meanwhile, a rear shock absorber mounting seat and other structures are generally provided on the rear wheel hoods 312 on the two sides.

Regarding the rear bumper beam 33 of embodiments of the present application, the rear bump beam 33 as a whole comprises a bumper beam body with a hollow interior, and connecting seats 35 connected to the front end surfaces of the bumper beam body, and the two connecting seats 35 are respectively provided near the two ends of the bumper beam body. In addition, the bumper beam body adopts an extruded aluminum structure, and a cross section of the bumper beam body is in a rectangular shape, a ratio of a width to a height of the cross section of the bumper beam body is not less than 0.7.

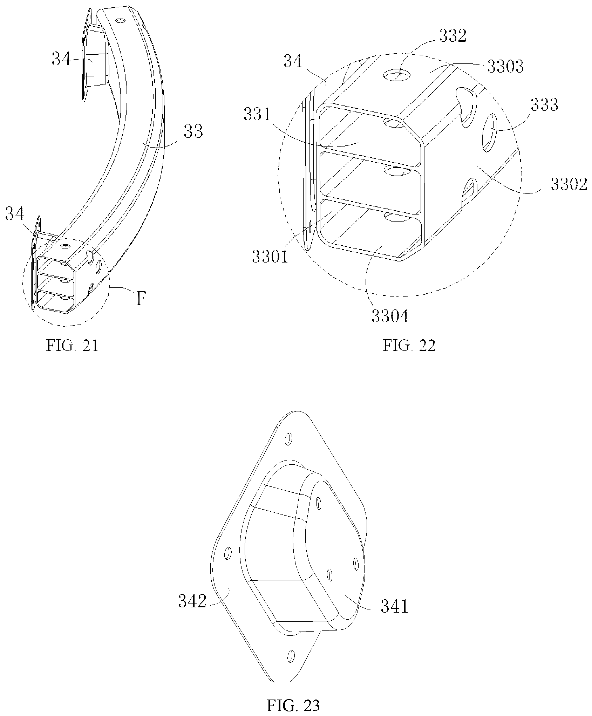

Specifically, the front end surfaces of the above-mentioned bumper beam body refer to the end surfaces of the bumper beam body facing the front end of the vehicle when it is assembled in the vehicle body. In addition, the cross section of the bumper beam body in embodiments of the present application is rectangular, as shown in FIG. 22, which is roughly rectangular in overall visual sense, but compared with a strict rectangle, the angles of the four corners of the cross section of the bumper beam body are not right angles, but can be subject to certain structural changes according to the requirements of appearance and structural performance, such as chamfering at the connection of adjacent side lengths.

As a preferred embodiment, the structural design in which the ratio of the width to the height of the cross section of the bumper beam body in embodiments of the present application is not less than 0.7 means that compared with the cross section height of the existing bumper beam body, the cross section height dimension of embodiments of the present application (the direction of the height refers to the vehicle height direction) remains unchanged, and the cross section width dimension (the width refers to the vehicle length direction) is increased, and the ratio of the width to the height is not less than 0.7, so as to realize the large cross section design of the bumper beam body, and the structural strength of the bumper beam body can be improved.

In embodiments of the present application, as a preferred embodiment, a middle of the rear bumper beam 33 also arches backward to make the bumper beam body presents an arc shape. Here, the middle of the rear bumper beam 33 arching out backward means that when the rear bumper beam 33 is assembled in the vehicle body, along the length direction of the vehicle, the middle of the rear bumper beam 33 arches out toward the rear of the vehicle, and the rear bumper beam 33 is arranged in an arc shape, which can improve the structural strength of the rear bumper beam itself, and provide better protection for the vehicle during the collision at the rear of the vehicle.

As a preferred embodiment, a reinforcing plate 331 is also integrally formed inside the bumper beam body, and the reinforcing plate 331 is connected between a front side wall 3301 and a rear side wall 3302 of the bumper beam body. The front and rear side walls herein refer to the front side wall 3101 and the rear side wall 3302 of the rear bumper beam 33 in the length direction of the vehicle, respectively, and the front end surface of the rear bumper beam 33 is the outer end surface of the front side wall 3301. The arrangement of the reinforcing plate 331 can effectively improve the structural strength of the rear bumper beam 33, thereby improving the anti-collision performance of the vehicle.

In specific implementation, the above reinforcing plates 331 are two reinforcing plates arranged at intervals from top to bottom, so that the cross-section of the rear bumper beam 33 is roughly in a 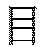 shape in the overall structure to obtain better structural strength. In addition, the reinforcing plate 331 is also provided with a bumper beam collapse hole 332, and the bumper beam collapse hole 332 passes through the upper side wall 3303 and the lower side wall 3304 of the rear bumper beam 33. In this way, on the one hand, the structural strength of the rear bumper beam 33 is improved by increasing the number of reinforcing plates 331, and on the other hand, the arrangement of the bumper beam collapse hole 332 can realize the collapse guidance of the reinforcing plate 331 during the collision of the vehicle, so that the rear bumper beam 33 has energy absorption performance.

The upper side wall 3303 and lower side wall 3304 mentioned in the above refer to the top side wall and bottom side wall of the rear bumper beam 33 in the vehicle height direction when the rear bumper beam 33 is assembled in the vehicle body. In addition to the use of two reinforcing plates, the number of the above-mentioned reinforcing plates 331 can also be adjusted and set accordingly according to the actual structural strength requirements of the rear bumper beam 33, for example, one, three, four reinforcing plates are arranged at intervals from top to bottom.

Moreover, the number and arrangement of the above-mentioned bumper beam collapse holes 332, in addition to being arranged to penetrate the upper side wall 3303 and the lower side wall 3304 of the rear bumper beam 33, can also be adjusted and arranged accordingly according to the actual collapse guidance requirements of the reinforcing plate 331. For example, the bumper beam collapse holes 332 are set to be two groups arranged at intervals, and the two groups of bumper beam collapse holes 332 are uniformly penetrated through the upper side wall 3303 and the lower side wall 3304 of the rear bumper beam 33. Alternatively, the bumper beam collapse holes 332 are arranged to penetrate the upper side wall 3303 of the rear bumper beam 33, or, the bumper beam collapse holes 332 are arranged to penetrate the lower side wall 3304 of the rear bumper beam 33.

It is worth mentioning that a chamfered structure is formed between the rear side wall 3302 of embodiments of the present application and each of the upper side wall 3303 and the lower side wall. The chamfered structures can guide the collapse of the upper side wall 3303 and the lower side wall 3304 when the vehicle is hit, thereby improving the collapse energy absorption effect of the rear bumper beam 33.

In embodiments of the present application, as a preferred embodiment, the connecting seat 34 comprises a connecting box 341 with a blind hole formed inside, and a connecting plate 342 fixedly connected to the connecting box 341, the connecting plate 342 is arranged around the opening of the blind hole, and the connecting box 341 is connected to the rear bumper beam 33, and a connecting portion for connecting the rear bumper beam 33 to the rear section 32 of the rear floor longitudinal beam is also provided on the connecting plate 342.

When the connection portion is specifically designed, an example structure thereof may be a plurality of plate connection holes arranged on the connecting plate 342, and these plate connection holes are arranged at intervals surrounding an opening of the blind hole, and the connecting plate 342 can be connected to the rear section 32 of the rear floor longitudinal beam in the vehicle body by bolts passing through the plate connection holes, so as to realize the convenient disassembly and assembly of the rear bumper beam 33 in the vehicle body.

Also as a preferred embodiment, the connecting seat 34 of embodiments of the present application can be designed to be detachably connected to the rear bumper beam 33. And as a further arrangement, the connecting seat 34 is connected to the front side wall 601 of the rear bumper beam 33, for example, by a screw connection structure, and a connecting via hole 333 corresponding to the screw connection structure is provided on the rear side wall 3302 of the rear bumper beam 33.

In the specific implementation, in embodiments of the present application, a plurality of box connection holes are provided on a box body of the connecting box 341, and a plurality of side wall connection holes are provided on the front side wall 3301 of the rear bumper beam 33. The connecting seat 34 and the rear bumper beam 33 are fixedly connected by a plurality of bolts penetrating through box connection holes and side wall connection holes to realize convenient disassembly and assembly between the connecting seat 34 and the rear bumper beam 33. The above-mentioned connecting via holes 333 are used for disassembly and assembly of bolts to improve the convenience of operation.

In embodiments of the present application, the rear bumper beam 33 is directly connected to the rear sections 32 of the rear floor longitudinal beams on the two sides through the connecting seats 34, and preferably in the form of screw connection. Moreover, as a further preferred constructing method, the above-mentioned rear sections 32 of the rear floor longitudinal beams can adopt extruded aluminum profiles to reduce the mold development cost and the weight thereof, so as to realize the lightweight design of the rear sections 32 of the rear floor longitudinal beams. In addition, in embodiments of the present application, a plurality of longitudinal beam rear section collapse holes can be provided on the rear section 32 of the rear floor longitudinal beam to enhance the energy absorption performance of the rear section of the rear floor longitudinal beam 5, thereby improving the quality of the whole vehicle.

It is worth mentioning here that since the above-mentioned rear section 32 of the rear floor longitudinal beam and rear bumper beam 33 both have collapsing energy absorption performance, thus can cooperate with each other to effectively improve the energy absorption effect of the rear part of the vehicle body, thereby effectively improving the quality of vehicle use. In addition, when the above-mentioned longitudinal beam rear section collapsing holes are specifically designed, two longitudinal beam rear section collapsing holes arranged at intervals are arranged on each of the four side walls of the rear section 32 of the rear floor longitudinal beam and at the connection between any two side walls.

The number and arrangement of the longitudinal beam rear section collapsing holes can also be constructed and adjusted accordingly according to the actual energy absorption requirements of the rear section 32 of the rear floor longitudinal beam.

In embodiments of the present application, based on the design of the above-mentioned rear bumper beam 33 and the design of the connection between the rear bumper beam 33 and the rear section 32 of the rear floor longitudinal beam, the anti-collision performance of the vehicle and the lightweight degree of the whole vehicle can also be improved. In addition, the rear section 32 of the rear floor longitudinal beam can replace the energy absorption box, the rear energy absorption box structure in traditional vehicles is eliminated, thereby achieving a simplified structure and conducive to the lightweight design of the whole vehicle.

The vehicle lower body structure in embodiments of the present application features in that the battery pack housing 1 is integrated with the vehicle body, the front engine room main body 21 and the rear floor 31 are both die-casting structures, the number of components in the battery pack housing 1 and the middle of the vehicle body are reduced, and the characteristics of the die-casting process are utilized, such that it is conducive to the molding and preparation of the lower body structure, and can reduce the manufacturing cost, and help to improve the overall strength and lightweight of the lower body, thus having good practicality.

In addition, it should be emphasized that the frame 11 of the battery pack housing in embodiments of the present application adopts an extruded aluminum profile structure, and is in a loop to form a force transmission ring structure, which can improve the overall structural strength of the frame 11. In addition, the frame 11 in embodiments of the present application is integrally extruded, and since the integral extrusion molding has a higher strength than the existing split splicing, the structural strength of the frame 1 itself can be greatly improved.

In addition, in combination with the horizontal and vertical interlaced arrangement of the middle duct 12 and the seat installation crossbeam 117, embodiments of the present application can also form a force transmission channel in the battery pack housing. Thus, through the force transmission network formed by the loop-structured frame 11 and the middle duct 12 and the seat installation crossbeam 117 therein, when the vehicle collides, the collision force can be absorbed by utilizing the structural characteristics of the aluminum profile, and the collision force, especially the side collision force, can be effectively dispersed and transmitted, thereby improving the collision safety of the middle part of the vehicle body.

The frame 1 has inclined portions at two ends, and the inclined portions present conical structures pointing to the front or rear of the vehicle, which can also facilitate the collision force from the front or rear of the vehicle body to be transmitted to the sill beams on the two sides. In this way, combined with the arrangement of the middle duct 12, the deformation of the middle part of the vehicle body, that is, the passenger room can be reduced during the collision, so as to improve the collision safety.

In addition, in embodiments of the present application, a heat insulating material is arranged in the frame 1 to prevent heat of the battery pack from being dissipated, in addition, the front floor panel 115 is generally made of the alloy material with good heat transfer performance, and a heat transfer material is further arranged on the front floor panel 115. In this way, the heat of the battery pack can be transferred to the passenger room through the front floor panel when the vehicle is used in cold seasons. As a result, the battery pack at the bottom of the passenger room forms a structure similar to floor heating to improve the ambient temperature in the vehicle, and it can also reduce the energy consumption of air conditioning heating, which is conducive to reducing the energy consumption of the whole vehicle.

Finally, embodiments of the present application also relate to a vehicle having the vehicle lower body structure as described in the above.

In addition, further, based on the concave arrangement of the top of the battery pack housing, embodiments of the present application can also provide a material having good heat conductivity on the front floor panel 15 to better transfer the heat of the battery pack to the passenger room. In such condition, the heat transfer material can be, for example, a graphene material, and specifically, the existing graphene plate can be used, and a carpet will be laid on the heat transfer material.

The above is only preferred embodiments of the present application, and is not intended to limit the present application. Any modification, equivalent replacement, improvement, etc. made within the spirit and principle of the present application should be included in the protection scope of the present application.

## Claims

1. A vehicle lower body structure, **characterized in that**
the vehicle lower body structure comprises: a battery pack housing (1), which is arranged in a middle of the lower body and integrated with a vehicle body; connecting members (118), which are respectively arranged at a front end and a rear end of the battery pack housing (1) for connection; a lower body front structure (2), which is connected to the connecting members (118) arranged at the front end; and a lower body rear structure (3), which is connected to the connecting members (118) arranged at the rear end;
the lower body front structure (2) comprises a front engine room main body (21) formed by integral die-casting, and the front engine room main body (21) is at least formed with engine room longitudinal beam parts (21011) for constructing engine room longitudinal beams, shock tower parts (21012) for constructing front shock towers, and wheel hood side beam parts (21013) for constructing wheel hood side beams; and
the lower body rear structure (3) comprises a rear floor (31) formed by integral die-casting, and the rear floor (31) is formed with rear floor longitudinal beams (311) arranged on two sides, and rear wheel hoods (332) connected to the rear floor longitudinal beams (311), respectively, at the two sides.

2. The vehicle lower body structure according to claim 1, **characterized in that**
the front engine room main body (21) comprises side parts (2101) arranged on a left side and a right side, and a connecting part (2102) connected between rear ends of the side parts (2101) arranged on the left side and the right side, and the side parts (2101) arranged on the left side and the right side are at least formed with the engine room longitudinal beam parts (21011), the shock tower parts (21012), and the wheel hood side beam parts (21013), respectively;
the rear floor (31) is further formed with a plurality of rear floor crossbeams (313) connected between the rear floor longitudinal beams (311) on the two sides, and rear ends of the rear floor longitudinal beams (311) on the two sides are respectively connected with rear sections (32) of the rear floor longitudinal beams.

3. The vehicle lower body structure according to claim 2, **characterized in that**
the lower body front structure (2) comprises a front subframe (29) connected to the connecting members (118) at the front end, the lower body rear structure (3) comprises a rear subframe (35) connected to the connecting members (118) at the rear end, and the front subframe (29) is connected to the front engine room main body (21), and the rear subframe (35) is connected to the rear floor (31); and/or,
a shock tower reinforcing beam (25) is connected between top ends of the shock tower parts (21012) on the two sides, and a front reinforcing beam (22) is connected between front ends of the wheel hood side beam parts (21013) on the two sides.

4. The vehicle lower body structure according to claim 2, **characterized in that**
the battery pack housing (1) has a frame (11) arranged in a loop shape, and a front floor panel (115) connected to an inner side of the frame (11), the frame (11) and the front floor panel (115) define a battery module installation space (116), the battery module installation space (116) is arranged below the front floor panel (115), a front end and a rear end of the frame (11) are respectively connected to the connecting members (118), and the front floor panel (115) is provided with a middle duct (12) and a seat installation crossbeam (117); and
the middle duct (12) is arranged along a length direction of the vehicle body, and two ends of the middle duct (12) are respectively connected to the front end and the rear end of the frame (11), and the seat installation crossbeam (117) is respectively connected to the frame (11) and the middle duct (12).

5. The vehicle lower body structure according to claim 4, **characterized in that**
the front floor panel (115) is arranged below a top of the frame (11), and a concave space (1150) defined by the frame (11) and the front floor panel (115) is formed at a top of the battery pack housing (1); and the middle duct (12) and the seat installation crossbeam (117) are arranged in the concave space (1150), and the seat installation crossbeam (117) has two installation strut beams arranged on two sides of the middle duct (12).

6. The vehicle lower body structure according to claim 5, **characterized in that**
the concave space (1150) is filled with a heat transfer material; and/or, tops of the front end and the rear end of the frame (11) are both provided with grooves (113), two ends of the middle duct (12) are fixedly connected in corresponding grooves (113), respectively, and the middle duct (12) defines therein a via hole (1200) which is arranged along a length direction of the middle duct (12) for allowing a wiring harness and/or a pipeline to pass through.

7. The vehicle lower body structure according to claim 4, **characterized in that**
the frame (11) has a hollow inner cavity, and the inner cavity is filled with a heat insulation and sound insulation material; and/or, the top of the front end of the frame (11) is provided with a reinforcing beam (114), and the reinforcing beam (114) is configured to be arranged corresponding to a rear end of the engine room longitudinal beam part (21011), so as to form a barrier to the movement of the engine room longitudinal beam part (21011) toward a rear of the vehicle body.

8. The vehicle lower body structure according to claim 7, **characterized in that**
each of the front end and the rear end of the frame (11) has a straight line portion (1120) extending in a width direction of the vehicle body, and inclined portions (1121) respectively connected to two ends of the straight line portion (1120), and each of the inclined portions (1121) is inclined outwardly in a direction away from the straight line portion (1120); and
the reinforcing beam (114) comprises a middle beam body (1140) connected to a top of the straight line portion (1120) at the front end, and end beam bodies (1141) respectively connected to tops of both the inclined portions (1121) at the front end, and tops of the end beam bodies (1141) are inclined surfaces which are gradually lower in a direction away from the middle beam body (1140).

9. The vehicle lower body structure according to claim 4, **characterized in that**
the frame (11) has straight sections (112) arranged on two sides, the straight sections (112) extend along the length direction of the vehicle body, and the straight sections (112) on the two sides constitute sill beams in the vehicle body; and/or, at least one of the frame (11), the middle duct (12), and the seat installation crossbeam (117) is made of an aluminum profile, and the connecting members (118) are cast by an aluminum alloy.

10. The vehicle lower body structure according to claim 2, **characterized in that**
a rear part of the wheel hood side beam part (21013) has a rear section (210131) of the wheel hood side beam part extending downward along a height direction of the vehicle body; a rear part of the engine room longitudinal beam part (21011) has a rear section (210111) of the engine room longitudinal beam part extending outward along a width direction of the vehicle body; the rear section(20103 1) of the wheel hood side beam part is connected to the rear section (210111) of the engine room longitudinal beam part, and the rear section (210131) of the wheel hood side beam part and the rear section (210111) of the engine room longitudinal beam part are provided with guide parts; and the guide parts are used to guide a collision force from a front of the vehicle to be transmitted backward.

11. The vehicle lower body structure according to claim 10, **characterized in that**
the guide part on the rear section (210131) of the wheel hood side beam part comprises a first rib part (210132) and a second rib part (210133) which are integrally formed on the rear section (210131) of the wheel hood side beam part; the first rib part (210132) extends along a length direction of the wheel hood side beam part (21013) and is arranged to be inclined downward from front to rear; the second rib part (210133) extends along a height direction of the wheel hood side beam part (21013), intersects with the first rib part (210132), and is arranged to be inclined forward from top to bottom; and/or,
the guide part on the rear section (210111) of the engine room longitudinal beam part comprises a third rib part (210112) integrally formed on the rear section (210111) of the engine room longitudinal beam part, and the third rib part (210112) extends along a length direction of the rear section (210111) of the engine room longitudinal beam part and is arranged to be inclined downward from front to rear.

12. The vehicle lower body structure according to claim 10, **characterized in that**
the side part (2101) is configured to have a collapse zone (B), a suspension installation reinforcing zone (C), and a collision reinforcing zone (D), which are arranged in sequence from front to rear, as well as a force transmission converging zone (E) arranged below the collision reinforcing zone (D); and
a material thickness of a primary surface position in the collapse zone (B) is between 2.5 mm and 3 mm, a material thickness of a primary surface position in the suspension installation reinforcing zone (C) is between 4 mm and 4.5 mm, a material thickness of a primary surface position in the collision reinforcing zone (D) is between 3.5 mm and 4 mm, and a material thickness of a primary surface position in the force transmission converging zone (E) is between 5 mm and 6 mm.

13. The vehicle lower body structure according to claim 2, **characterized in that**
the lower body front structure (2) comprises a front bumper beam (210), which is connected between front ends of the engine room longitudinal beams (21011) on the two sides, and the lower body rear structure (3) comprises a rear bumper beam (33), which is connected between rear ends of the rear sections of the rear floor longitudinal beam (32) on the two sides; the rear bumper beam (33) comprises: a bumper beam body having a hollow interior, and two connecting seats (34) connected to front end surfaces of the bumper beam body; and the rear bumper beam (33) is directly connected between the rear sections (32) of the rear floor longitudinal beams at the two sides through the two connecting seats (34).

14. The vehicle lower body structure according to claim 13, **characterized in that**
the bumper beam body adopts an extruded aluminum structure, and a cross section of the bumper beam body is in a rectangular shape, a ratio of a width to a height of the cross section of the bumper beam body is not less than 0.7, and a reinforcing plate (331) is integrally formed inside the bumper beam body, and the reinforcing plate (331) is connected between a front side wall (3301) and a rear side wall (3302) of the bumper beam body; and/or,
the rear section (32) of the rear floor longitudinal beam adopts an extruded aluminum profile, and the rear section (32) of the rear floor longitudinal beam defines therein a plurality of longitudinal beam rear section collapse holes.

15. A vehicle, **characterized in that**
the vehicle comprises the vehicle lower body structure according to any of claims 1-14.
